# EUROPÄISCHE PATENTSCHRIFT

(11) **EP 0 744 682 B1**
(45) Veröffentlichungstag und Bekanntmachung des Hinweises auf die Patenterteilung: **24.01.2001**
(21) Anmeldenummer: 96105481.4
(22) Anmeldetag: 04.04.1996
(51) Int. Cl.: G05D 11/02, G05B 13/02, B28C 7/00, C04B 7/38

(54) **Verfahren und Anlage zur Aufbereitung einer Materialmischung**
Process and plant for treating a mixture of materials
Procédé et installation pour le traitement d'un mélange de matières

(30) Priorität: 23.05.1995 DE 19518958
(43) Veröffentlichungstag der Anmeldung: 27.11.1996
(73) Patentinhaber: KRUPP POLYSIUS AG, 59269 Beckum (DE)
(72) Erfinder: Teutenberg, Josef, Dipl.-Ing., 59269 Beckum (DE); Brosowski, Werner, Dipl.-Ing., 59075 Hamm (DE)
(74) Vertreter: Tetzner, Michael, Dipl.-Ing.

(56) Entgegenhaltungen:
- DD-A- 143 961
- DE-A- 2 524 375
- DE-A- 3 139 916
- US-A- 3 170 677
- US-A- 3 233 973
- US-A- 3 835 873
- IEEE TRANSACTIONS ON INDUSTRY APPLICATIONS, Bd. IA-22, Nr. 2, April 1986, NEW YORK US, Seiten 324-329, XP002012462 S.J. WEISS ET AL: "New Control Strategies for Raw Mix Preparation"
- ZEMENT, KALK, GIPS, Nr. 6, 1973, WIESBADEN DE, Seiten 269-280, XP002012035 M. HILBIG: "Moderne Prozessautomation im Zementwerk"

## Beschreibung

Die Erfindung betrifft ein Verfahren (entsprechend Oberbegriff des Anspruches 1) sowie eine Anlage (entsprechend Oberbegriff des Anspruches 12) zur Aufbereitung einer Materialmischung aus mehreren mineralischen Rohmaterialkomponenten, insbesondere einer Rohmehlmischung zum Brennen von Zementklinker.

Will man beispielsweise eine Brenneinrichtung bzw. Ofenanlage zur Herstellung von Zementklinker gleichmäßig und mit optimalem Durchsatz betreiben, dann ist es eine wichtige Voraussetzung, daß der Brenneinrichtung eine Rohmaterial- bzw. Rohmehlmischung mit vorgegebener und gleichbleibender Qualität zugeführt wird. Eine Vergleichmäßigung der herzustellenden Rohmaterialmischung kann durch entsprechendes Mischen verschiedener mineralischer Rohmaterialkomponenten beispielsweise in einem Mischbett oder auch unmittelbar vor einem Rohmühlensystem erfolgen, vor dem die einzelnen Rohmaterialkomponenten zusammengeführt und in dem diese zusammengeführten Rohmaterialkomponenten gemeinsam gemahlen werden. Die einzelnen Rohmaterialkomponenten sind in ihrer Zusammensetzung jedoch nicht immer konstant, so daß eine ständige Überwachung und Nachregelung der Mischungskomponenten erforderlich ist. Zu diesem Zweck ist es bereits bekannt, vollautomatisch arbeitende sogenannte Laborautomationssysteme einzusetzen, die für eine Überwachung und eine eventuell notwendig werdende Nachregelung der Komponentendosierung sorgen.

Es ist somit bereits bekannt, durch ein solches Laborautomationssystem die Massenströme der einzelnen mineralischen Rohmaterialkomponenten, die die gemeinsame Rohmühlenaufgabe bilden und aus denen die aufzubereitende Materialmischung zusammengemischt wird, über Rohmaterial-Analysedaten automatisch mit Hilfe geeigneter Dosiervorrichtungen über eine zentrale Steuereinrichtung zu steuern. Dazu werden mit Hilfe einer automatischen Materialprobe-Entnahmestation beispielsweise am Ausgang einer Rohmühle aus dem zerkleinerten Material in bestimmten Zeitabständen periodisch Materialproben entnommen. Die Dauer einer Probenahme kann sich hierbei etwa über eine halbe Stunde erstrecken, worauf die anfallenden Materialproben gesammelt und gemischt werden und daraus eine repräsentative Materialprobe zur Analyse über eine Rohrpostanlage in ein zentrales Labor transportiert und dort mit Hilfe eines vollautomatischen Aufbereitungsautomaten analysiert wird. Über diese Analyse werden die jeweiligen IST-Werte der gemahlenen Materialzusammenstellung hinsichtlich Oxide, Kalkstandard (KSt), Silikatmodul (SM) und Tonerdemodul (TM) errechnet. Diese errechneten IST-Werte werden mit vorgegebenen SOLL-Werten für KSt, SM, TM usw. verglichen, woraufhin bei eventuell festgestellten Abweichungen zwischen den IST-und SOLL-Werten über einen Laborrechner der Steuereinrichtung ein Regeleingriff zur entsprechenden Korrektur der Dosierung wenigstens einer der Rohmaterialkomponenten durchgeführt wird, indem die Dosiervorrichtungen von Vorratszellen für die einzelnen Rohmaterialkomponenten "On-line" entsprechend verstellt werden.

Aus den vorhergehenden Erläuterungen leuchtet ein, daß Qualitätsschwankungen in der Rohmaterial-Zusammensetzungen innerhalb eines Probeentnahmezyklus von etwa < 30 min nicht erfaßt und ausgeregelt werden können, so daß eine entsprechend umfangreiche Nachhomogenisierung der gemahlenen Rohmaterialmischung erforderlich ist. Bei relativ großen Durchlaufmischsilos, wie sie vielfach für die Homogenisierung bzw. Nachhomogenisierung von Rohmehlmischungen für die Zementklinkerherstellung verwendet werden, ist es nicht möglich, eine definierte Materialmasse zu homogenisieren, sondern es muß mit einem fiktiven Silovolumen mit vielfach mehreren tausend Tonnen gerechnet werden. Derartige Homogenisiersilos benötigen nicht nur ein relativ großes Volumen, sondern es muß auch der Tatsache Rechnung getragen werden, daß derartige Rohmaterialmischungen aufgrund ihres unterschiedlichen Chemismus in den einzelnen Kornfraktionen zur Separation neigen, d.h. beispielsweise Zementrohmehl entmischt sich beim Füllen eines großen Homogenisiersilos und kann auch in bekannten Durchlaufmischsilos nicht genügend (gezielt) zurückgemischt werden. Als Folge davon kann beispielsweise bei der Herstellung von Zementklinker der Brenneinrichtung bzw. Brennanlage die Rohmehlmischung nicht mit der gewünschten vorgegebenen und gleichbleibenden Qualität aufgegeben werden.

Aus der DE-A-25 24 375 ist daher ein verfahren gemäß dem Oberbegriff des Anspruchs 1 bekannt.

Der Erfindung liegt nun die Aufgabe zugrunde, ein Verfahren gemäß dem Oberbegriff des Anspruches 1 sowie eine Anlage nach dem Gattungsbegriff des Anspruches 12 derart weiterzuentwickeln, daß zum einen auch bei starken Schwankungen in der chemischen Zusammensetzung zumindest der Hauptrohmaterialkomponenten in relativ kurzen Zeitabständen Materialproben-Auswertungen und daraufhin notwendig werdende Korrektur-Regeleingriffe für die der Zerkleinerung zuzuführenden Rohmaterialzusammensetzungen ermöglicht werden und daß zum anderen eine Nachhomogenisierung der gemahlenen Rohmaterialmischung bei relativ geringem Bauaufwand mit großer Zuverlässigkeit durchgeführt werden kann.

Diese Aufgabe wird in verfahrenstechnischer Hinsicht durch die Merkmale des Anspruches 1 und in bezug auf die Anlage durch die Merkmale des Anspruches 12 gelöst.

Vorteilhafte Ausgestaltungen und Weiterbildungen der Erfindung sind Gegenstand der Unteransprüche.

Erfindungsgemäß können also durch das automatische Schnellanalysieren vor Ort in relativ kurzen Zeitabständen Materialproben zumindest aus dem von der Zerkleinerungseinrichtung kommenden Massenstrom entnommen und hinsichtlich ihrer IST-Werte für die Oxide und die verschiedenen vorgegebenen Moduli (Kalkstandard, Silikatmodul und Tonerdemodul) analysiert werden. Dies kann aufgrund der kurzen Wege zwischen einer Probeentnahmestelle und der Schnellanalysiereinrichtung auch mit relativ geringem Bauaufwand geschehen. Die gemessenen IST-Werte können dann rasch und über einfache Signalleitungen dem Laborrechner zugeleitet werden, um sie dort mit den vorgegebenen SOLL-Werten für die genannten Moduli zu vergleichen. Bei Feststellung einer Abweichung der IST-Werte von den SOLL-Werten kann über das Steuersystem, dem der Laborrechner zugeordnet ist, dann rasch ein entsprechender Regeleingriff zur Korrektur der Dosierung wenigstens einer der verschiedenen Rohmaterialkomponenten durchgeführt werden.

Obwohl der dem Steuersystem zugeordnete Laborrechner generell ebenfalls vor Ort, d.h. unmittelbar bei der Schnellanalysiereinrichtung angeordnet werden könnte, wird es im allgemeinen vorgezogen werden, den Laborrechner im zentralen Labor anzuordnen, so daß die IST-Werte der Analyse dann dementsprechend einem zentralen Laborrechner zugeleitet werden, was besonders bei staubintensiven Anlagenteilen von Vorteil ist.

Trotz der zuvor geschilderten Möglichkeit, relativ rasch auf irgendwelche Änderungen in der chemischen Zusammensetzung der einzelnen Rohmaterialien im Sinne einer gleichbleibenden Qualität der herzustellenden Rohmaterialzusammensetzung korrigierend einwirken zu können, ist es auch bei diesem erfindungsgemäßen Verfahren aus verschiedenen Gründen erforderlich, eine Nachhomogenisierung der gemahlenen Rohmaterialmischung durchzuführen. Da jedoch - wie zuvor erwähnt - sehr rasch auf irgendwelche Schwankungen in der Zusammensetzung der Rohmaterialkomponenten korrigierend eingewirkt werden kann, ist erfindungsgemäß - im Vergleich zu den bekannten Verfahren - nur eine relativ geringe Kapazität für dieses Nachhomogenisieren erforderlich. Besonders günstig ist dabei, daß erfindungsgemäß dieses Homogenisieren in einen gesonderten Mischbereich und in einen gesonderten Vorratsbereich unterteilt ist, wobei der Mischbereich nur für wenigstens eine stündliche Mahlleistung der Zerkleinerungseinrichtung ausgelegt zu werden braucht, um für eine zuverlässige Nachhomogenisierung der gemahlenen Rohmaterialmischung zu sorgen. Dieser relativ klein auszulegende Mischbereich kann daher mit relativ geringem baulichen Aufwand erstellt werden. Der davon gesonderte Vorratsbereich ist vor allem für eine Bevorratung bzw. Zwischenspeicherung des bereits homogenisierten Materialgemisches zwischen dem Mischbereich und der Weiterverarbeitungseinrichtung, also beispielsweise einer Brennanlage zur Herstellung von Zementklinker, bestimmt, so daß er nur mit relativ einfachen Auslaufarmaturen usw. ausgestattet werden muß. Dieser Vorratsbereich muß in seiner Kapazität etwa so groß ausgelegt werden, daß er ein ausreichend großes Speicherungsvolumen besitzt, um beispielsweise mögliche (gewollte oder ungewollte) Stillstandszeiten der Zerkleinerungseinrichtung überbrücken zu können, ohne daß die Weiterverarbeitungseinrichtung (z.B. Brennanlage) deswegen ebenfalls stillgelegt werden müßte.

Bei diesem erfindungsgemäßen Verfahren wird der gesamte Massenstrom der in der Zerkleinerungseinrichtung gemahlenen Rohmaterialmischung in den Mischbereich hineingefördert und dort ausreichend homogenisiert. Aus diesem Mischbereich wird dann - bei Betrieb der Zerkleinerungseinrichtung - die Materialmischung einerseits, und zwar vorzugsweise in einer größeren Hauptmenge, einer Weiterverarbeitungseinrichtung (z.B. einer Brenneinrichtung bzw. Brennanlage zur Herstellung von Zementklinker) und andererseits, und zwar vorzugsweise in einer kleineren Teilmenge, dem gesonderten Vorratsbereich in jeweils einstellbaren Mengenanteilen zugefördert, so daß von dem Mischbereich zum einen die Weiterverarbeitungseinrichtung und zum andern - gleichzeitig - der Vorratsbereich ständig beschickt werden kann. Es kann auf diese Weise also gleichzeitig noch für ein weiteres Verschneiden von zu unterschiedlichen Zeitabschnitten aufbereiteten Materialmischungen gesorgt werden.

Durch dieses erfindungsgemäße Verfahren wird also gewissermaßen auch eine sinnvolle Kombination zwischen einer Steuerung über ein Laborautomationssystem für die einzelnen Rohmaterialkomponenten und einer gezielten Mischtechnik für die Nachhomogenisierung und gesonderte Bevorratung des aufbereiteten Materialgemisches geschaffen.

Mit Hilfe der Schnellanalysiereinrichtung, in der vor Ort die entnommenen Materialproben aufbereitet werden und eine Röntgenfluoreszenzanalyse durchgeführt wird, kann der zentrale Laborrechner bereits nach einer Analysenzeit von etwa 3 min die Ergebnisse bzw. Signale der gemessenen IST-Werte erhalten, um unmittelbar danach eventuell notwendig werdende Regeleingriffe für eine Dosierungsänderung der Rohmaterialkomponenten zu veranlassen. Durch eine solche Vor-Ort-Probenaufbereitung und -Schnellanalyse werden Regelzyklen von etwa 5 bis 10 min ermöglicht (im Vergleich zu etwa 30 min bei der eingangs beschriebenen bekannten Praxis-Ausführung).

Generell ist es möglich, die Materialproben im Bereich zwischen der Zerkleinerungseinrichtung und dem Mischbereich (vorzugsweise kurz hinter der Zerkleinerungseinrichtung) sowie wahlweise zusätzlich auch noch nach Verlassen des Mischbereiches automatisch zu ziehen und der unmittelbar in der Nähe dieser Abschnitte bzw. Probeentnahmestationen befindlichen Schnellanalysiereinrichtung zuzuführen.

Erfindungsgemäß können wenigstens vier repräsentative Materialproben je Stunde gezogen und vor Ort auf die jeweiligen IST-Werte ihrer Oxide sowie ihrer verschiedenen Moduli (KSt, SM und TM) analysiert werden. Vielfach wird es jedoch besonders günstig und zweckmäßig sein, häufigere Materialprobeentnahmen und -analysen vorzunehmen, beispielsweise alle 10 min, um dadurch sehr rasch auf eventuell auftretende Änderungen in der Zusammensetzung einzelner Rohmaterialkomponenten regeltechnisch reagieren zu können, damit stets eine vorgegebene und gleichbleibende Qualität der aufzubereitenden Materialmischung gewährleistet werden kann.

Die Zufuhr der einzelnen Rohmaterialkomponenten zur Zerkleinerungseinrichtung wird gemäß einer vorteilhaften Ausgestaltung der Erfindung jeweils für sich gewichtsmäßig dosiert (beispielsweise mit Hilfe von Dosierbandwaagen), und diese Dosierung wird direkt, d.h. "On-line", über den zentralen Laborrechner des Steuersystems zumindest im Sinne einer notwendigen Korrektur der SOLL-Werte der vorgegebenen Moduli eingestellt bzw. verstellt.

Weitere Einzelheiten der Erfindung werden nachfolgend anhand einiger in der Zeichnung veranschaulichter Ausführungsbeispiele näher erläutert. In dieser Zeichnung zeigen
- Fig.1: eine Schemadarstellung (Fließbild) eines ersten Ausführungsbeispieles der erfindungsgemäßen Anlage zur Aufbereitung einer mineralischen Materialmischung, insbesondere einer Zementrohmehlmischung;
- Fig.2: eine Teil-Schemadarstellung zur Erläuterung eines zweiten Ausführungsbeispieles der Aufbereitungsanlage, wobei im Homogenisierabschnitt Mischbereich und Vorratsbereich nebeneinander angeordnet sind;
- Fig.3: eine Teil-Schemadarstellung zur Erläuterung eines anderen Ausführungsbeispieles der Aufbereitungsanlage, wobei der Mischbereich über dem Vorratsbereich angeordnet ist.

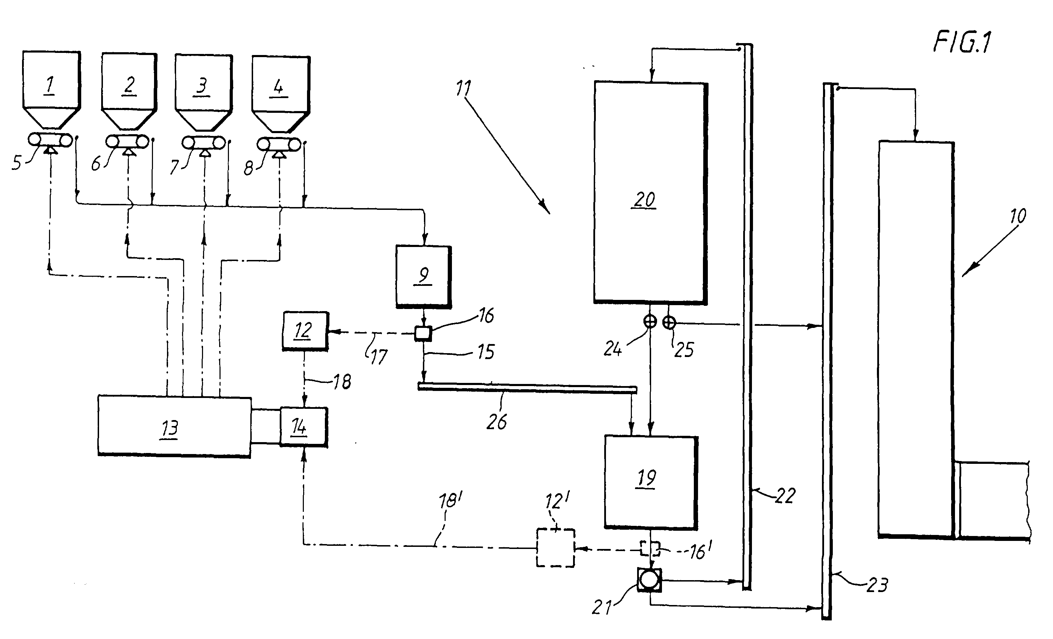

Bei dem in Fig.1 veranschaulichten ersten Ausführungsbeispiel der Anlage zur Aufbereitung einer Rohmaterialmischung sei angenommen, daß sie insbesondere zur Aufbereitung einer (Zement-) Rohmehlmischung zum Brennen von Zementklinker ausgebildet ist. Es sei jedoch bereits an dieser Stelle bemerkt, daß eine solche Anlage auch zur Aufbereitung anderer mineralischer Materialmischungen aus verschiedenen Rohmaterialkomponenten geeignet ist, wobei es ebenfalls darauf ankommt, bestimmte SOLL-Werte bezüglich der chemischen Zusammensetzung in der erhaltenen Materialmischung einzustellen und aufrechtzuerhalten.

Die in Fig.1 veranschaulichte Aufbereitungsanlage enthält als wesentliche Anlagenteile mehrere (im vorliegenden Beispiel vier) Rohmaterial-Vorratszellen 1 bis 4, unter denen je eine fernsteuerbare Dosiervorrichtung beispielsweise in Form einer Dosierbandwaage 5, 6, 7 bzw.8 angeordnet ist, ferner eine Zerkleinerungseinrichtung mit wenigstens einer Rohmühle 9, einen zwischen dieser Rohmühle 9 und einer als Weiterverarbeitungseinrichtung dienenden Brennanlage bzw. Brenneinrichtung 10 angeordneten Homogenisierabschnitt 11, wenigstens eine Analysiereinrichtung 12 für Materialproben sowie eine zentrale Steuereinrichtung 13, der ein mit der Analysiereinrichtung 12 verbundener Laborrechner 14 zugeordnet ist. Besonders in staubintensiven Anlagenbereichen wird es vorgezogen, diesen Laborrechner 14 zentral, d.h. im Zentrallabor zu installieren.

In den verschiednenen Rohmaterial-Vorratszellen 1, 2, 3, 4 können jeweils die einzelnen Rohmaterialkomponenten aufgenommen werden, bei denen es sich für die Herstellung einer Zementrohmehlmischung insbesondere um Kalkstein, Mergel, Silikat und Eisenoxid sowie ggf. andere Bestandteile und Korrekturmittel handeln kann. Mit Hilfe der Dosierbandwaagen 5 bis 8 können die einzelnen Rohmaterialkomponenten entsprechend ihren chemischen Zusammensetzungen in vorgegebenen Gewichts- bzw. Mengenanteilen dosiert und als Rohmaterialzusammenstellung gemeinsam der Rohmühle 9 aufgegeben werden, bei der es sich vorzugsweise um eine Wälzmühle, ggf. aber auch um eine Walzenmühle handeln kann. In dieser Rohmühle 9 werden die in einstellbaren Mengen zuführbaren Rohmaterialkomponenten gemeinsam auf eine vorgegebene Feinheit zerkleinert bzw. gemahlen.

Die Dosierbandwaagen 5 bis 8 stehen über strichpunktiert angedeutete Steuerleitungen mit der Steuereinrichtung 13 in Steuerverbindung, so daß sie zu jeder Zeit im Sinne einer Dosierungskorrektur einzeln angesteuert werden können, damit insbesondere vorgegebene Moduli hinsichtlich der chemischen Zusammensetzung der aufzubereitenden Materialmischung bzw. des aufzubereitenden Rohmehles eingestellt und aufrechterhalten werden können. Zu diesem Zweck ist in der Auslaufschurre bzw. Abförderleitung 15 der Rohmühle 9 eine Materialprobe-Entnahmestation 16 angeordnet, durch die aus dem von der Rohmühle 9 ablaufenden Materialstrom in einstellbaren Zeitabständen periodisch Materialproben entnommen und über eine kurze, gestrichelt angedeutete Probenleitung 17 der ganz in der Nähe, also vor Ort angeordneten Analysiereinrichtung 12 zugeführt wird.

Diese vor Ort im Nahbereich der Materialprobe-Entnahmestation 16 angeordnete Analysiereinrichtung ist erfindungsgemäß durch ein Schnellanalysiergerät 12 für eine automatische Probeaufbereitung und Röntgenfluoreszenzanalyse gebildet. Es können auf diese Weise vor Ort in relativ kurzen Zeitabständen Proben aus dem gemahlenen Materialstrom entnommen und sofort hinsichtlich ihrer chemischen Zusammensetzung, insbesondere hinsichtlich ihrer Oxide und ihrer oben angegebenen Moduli (KSt, SM und TM) analysiert werden. Während die verbrauchten Proben unmittelbar in die Abförderleitung 15 zurückgeführt werden können, werden die im Schnellanalysiergerät 12 ermittelten IST-Werte der Oxide und Moduli über eine Signalleitung 18 sofort dem zentralen Laborrechner 14 übermittelt. Mit Hilfe dieses zentralen Laborrechners 14 werden die jeweils neu ermittelten IST-Werte für die Oxide und die mineralischen Moduli mit den dafür vorgegebenen SOLL-Werten verglichen. Falls bei diesem zeitlich rasch durchführbaren Vergleich eine Abweichung der aktuellen IST-Werte von den vorgegebenen SOLL-Werten festgestellt wird, dann wird über die Steuereinrichtung 13, zu der der zentrale Laborrechner 14 gehört, sofort ein entsprechender Regeleingriff veranlaßt, um eine Korrektur der Dosierung wenigstens einer Rohmaterialkomponente durchzuführen, indem die zugehörige Dosierbandwaage 5, 6, 7 bzw. 8 (ggf. auch mehrere) im Sinne einer errechneten Korrektur entsprechend angesteuert wird.

Durch solche Schnellanalysen vor Ort sowie durch die nachfolgenden Rechner- und Steueraktivitäten sind relativ häufige Überwachungs- und Korrektureingriffe bei der Aufbereitung von Materialmischungen bzw. Rohmehlmischungen in relativ kurzen Regelzyklen, beispielsweise von 5 bis 10 min, möglich. Auf diese Weise kann die Erzeugung einer vorgegebenen und gleichbleibenden Qualität der aufzubereitenden Rohmehlmischung gewährleistet werden, d.h. es wird ein relativ homogenes Rohmehl erzeugt, so daß im Vergleich zu den eingangs erläuterten bekannten Ausführungen deutlich weniger Mischarbeit bzw. weniger Mischvolumen erforderlich ist. Dementsprechend kann in äußerst vorteilhafter Weise bei dieser Aufbereitungsanlage der Homogenisierabschnitt 11 in einen Mischbereich und in einen Vorratsbereich mit jeweils relativ geringer Aufnahmekapazität unterteilt werden.

Der Mischbereich wird vorzugsweise durch einen Mischsilo bzw. Mischbehälter 19 gebildet, der in bekannter Weise ausgebildet sein kann und dessen Aufnahmekapazität entsprechend den betrieblichen Gegebenheiten etwa der ein- bis dreifachen stündlichen Mahlleistung (t/h) der Rohmühle 9 angepaßt ist. Der Vorratsbereich kann durch einen Vorratssilo 20, vorzugsweise etwa in Form eines an sich bekannten Durchlaufsilos ausgebildet sein; seine Speicherkapazität braucht nur einer erforderlichen und dementsprechend vorgegebenen Vorratsmenge zu entsprechen, die zumindest durch mögliche Stillstandszeiten der Rohmühle 9, eine zeitlich festgelegte erforderliche Verfügbarkeit der Brenneinrichtung 10 und eventuell durch ein gewünschtes zusätzliches Vorratsvolumen bestimmt ist.

Dem Mischbehälter 19, d.h. dessem Auslauf, ist zweckmäßig ein einstellbares Aufteilgerät, vorzugsweise ein Mengenaufteilgerät 21 nachgeordnet, das einerseits über einen ersten Förderweg mit der Brenneinrichtung (Weiterverarbeitungseinrichtung) 10 und andererseits über einen zweiten Förderweg mit dem Zulauf des Vorratssilos 20 verbunden ist. In dem Ausführungsbeispiel gemäß Fig.1 ist der Mischbehälter 19 unterhalb des Vorratssilos 20 angeordnet, wobei der erste Förderweg als Hauptfördereinrichtung einen ersten Becherwerksförderer 23 und der zweite Förderweg in der Hauptsache durch einen zweiten Becherwerksförderer 22 gebildet wird, wobei als Verbindungseinrichtungen noch Schurren, Förderleitungen oder dergleichen vorgesehen sein können.

Der Vorratssilo 20 weist in diesem Anlagenbeispiel (Fig.1) in seinem Auslaufbereich zwei einstellbare Dosiergeräte (z.B. Dosierdrehschieber oder dergleichen) 24, 25 auf, so daß je nach Bedarf ein einstellbarer Mengenanteil aus dem Vorratssilo 20 - über den ersten Becherwerksförderer 23 - ebenfalls zur Brenneinrichtung 10 und/oder eine ebenfalls einstellbare Teilmenge (über Dosiergerät 24) zum Mischbehälter 19 zurückgeführt werden kann.

Durch die zuvor geschilderten Förderverbindungen (einerseits vom Mischbehälter 19 zur Brenneinrichtung 10 und andererseits wahlweise vom Vorratssilo 20 zur Brenneinrichtung 10 und/oder zum Mischbehälter 19) ergeben sich in vorteilhafter Weise weitere Möglichkeiten, die im Mischbehälter 19 homogenisierte Rohmehlmischung mit kleineren Mengenanteilen aus dem Vorratssilo 20 zu verschneiden. Darüber hinaus kann bei einem - gewollten oder ungewollten - Stillstand der Rohmühle 9 aus dem Vorratssilo 20 die Rohmehlmischung direkt zur Brenneinrichtung 10 oder über den Mischbehälter 19 zur Brenneinrichtung 10 oder auch in einstellbaren Mengenanteilen zum Teil direkt zur Brenneinrichtung 10 und zum Teil über den Mischbehälter 19 zur Brenneinrichtung 10 gefördert werden. In jedem Falle wird jedoch der gesamte Rohmaterial-Massenstrom aus der Rohmühle 9 direkt in den Mischbehälter 19 hineingefördert.

In bezug auf dieses Anlagenbeispiel gemäß Fig.1 ergeben sich vor allem auch noch folgende Verfahrensmöglichkeiten bzw. Betriebsweisen:
- Die Anlage kann im sogenannten Verbundbetrieb gefahren werden, bei dem die Rohmühle 9 läuft. In diesem Falle wird aus dem Mischbehälter 19 ständig eine - durch das Aufteilgerät 21 - einstellbare Hauptmenge (z.B. 70 bis 130 % bezogen auf den von der Rohmühle 9 herangeförderten Massenstrom) des homogenisierten Massenstromes aus dem Mischbehälter 19 der Brenneinrichtung 10 zum Brennen von Zementklinker und eine kleinere, ebenfalls durch das Aufteilgerät 21 einstellbare Teilmenge dieses Massenstromes (beispielsweise etwa 10 bis 30 %) dem Vorratssilo 20 zugeleitet. Gleichzeitig wird zweckmäßig aus dem Vorratssilo 20 stets eine kleine - durch das Dosiergerät 24 und/oder 25 - einstellbare Teilmenge (beispielsweise etwa 10 bis 30 % des Massenstromes) der Brenneinrichtung 10 und/oder dem Mischbehälter 19 zugeführt. Hierdurch wird sichergestellt, daß das Fließverhalten im Vorratssilo 20 aufrechterhalten bleibt, daß der Vorratssilo 20 ständig aufgefüllt wird und daß durch Verschneiden von Rohmehlen, die zu unterschiedlichen Zeiten hergestellt bzw. aufbereitet wurden, die Homogenität des Rohmehles nochmals verbessert wird.
- Betriebsweise im sogenannten Direktbetrieb, bei dem die Rohmühle 9 - gewollt oder ungewollt - stillsteht. Bei diesem Direktbetrieb wird der größte Anteil bzw. eine einstellbare Hauptmenge (beispielsweise etwa 70 bis 100 %) des Massenstromes bzw. der Rohmehlmischung aus dem Vorratssilo 20 über den Mischbehälter 19 gefahren und mit einer kleineren, einstellbaren Teilmenge (beispielsweise etwa 10 bis 30 %) der Rohmehlmischung verschnitten, die direkt aus dem Vorratssilo 20 abgezogen und der Brenneinrichtung 10 zugeführt wird. Somit kann man auch im Direktbetrieb erreichen, daß durch Verschneiden von Mehlen, die zu unterschiedlichen Zeiten hergestellt wurden, die Homogenität nochmals verbessert wird.
- Bei der Erstbefüllung des Vorratssilos 20 oder nach einem Ofenstillstand ohne verbliebenen Vorrat kann es ferner zweckmäßig sein, den ganzen Massenstrom aus der Rohmühle 9 entweder über den Mischbehälter 19 oder direkt - über den entsprechenden Becherwerksförderer - in den Vorratssilo 20 zu fördern, um letzteren besonders schnell auffüllen zu können.

Zweckmäßigerweise wird im Vorratssilo 20 stets eine vorbestimmte Speichermenge der Rohmehlmischung aufrechterhalten.

Wie in Fig.1 ferner zu erkennen ist, kann zwischen der Abförderleitung 15 (unter der Rohmühle 9) und dem oberen Zulauf des Mischbehälters 19 im Bedarfsfalle noch eine im wesentlichen horizontal fördernde Fördereinrichtung, vorzugsweise in Form einer pneumatischen Förderrinne 26 vorgesehen sein. Außerdem besteht auch - wie zum Teil gestrichelt angedeutet - noch die Möglichkeit, zusätzlich unter dem Auslauf des Mischbehälters 19 eine weitere Materialprobe-Entnahmestation 16' mit zugeordneter Analysiereinrichtung 12' vorzusehen, die ihrerseits über eine weitere Signalleitung 18' mit dem zentralen Laborrechner 14 ebenfalls in Signalverbindung steht. Auf diese Weise wird eine zusätzliche Überwachungsmöglichkeit hinsichtlich der chemischen Zusammensetzung des Material- bzw. Rohmehlgemisches geschaffen. Auch in diesem Falle werden die Materialproben automatisch gezogen und der unmittelbar vor Ort befindlichen Schnellanalysier-Einrichtung 12' zugeführt.

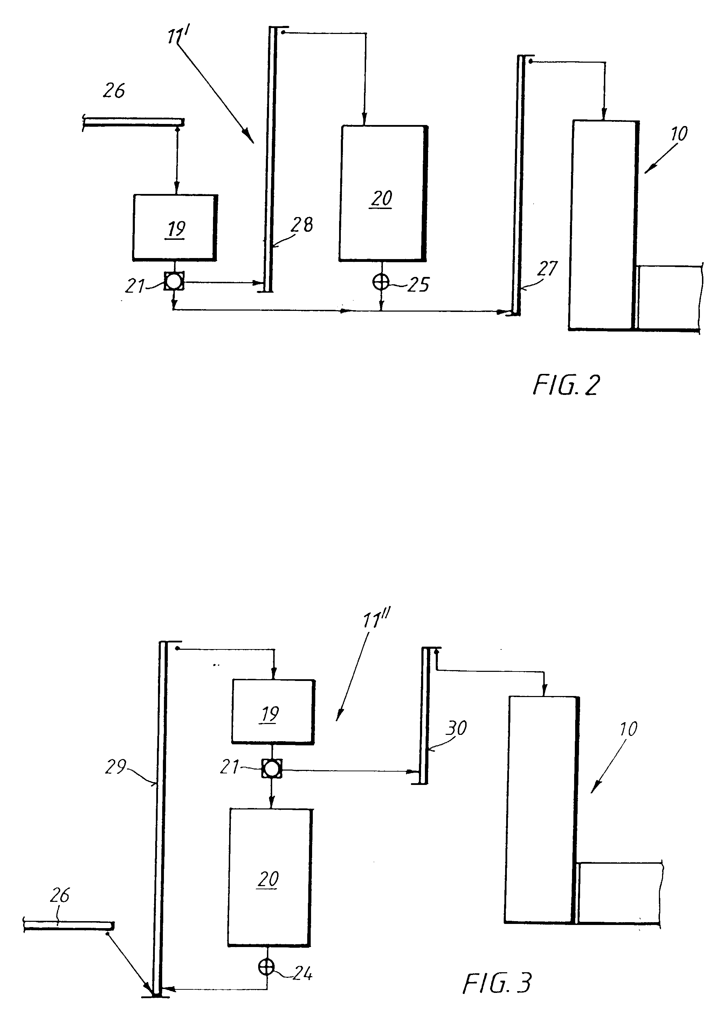

In den Fig.2 und 3 sind zwei weitere Ausführungsbeispiele der erfindungsgemäßen Aufbereitungsanlage in Teil-Schemadarstellungen veranschaulicht, d.h. es handelt sich hier insbesondere um zwei Ausführungsvarianten zum Homogenisierabschnitt 11 im Beispiel der Fig.1.

Fig.2 zeigt eine Ausführungsmöglichkeit, nach der im Homogenisierabschnitt 11' der den Mischbereich bildende Mischbehälter 19 räumlich neben dem den Vorratsbereich bildenden Vorratssilo 20 angeordnet ist. Mischbehälter 19 und Vorratssilo 20 können hinsichtlich ihres allgemeinen Aufbaus, ihrer Funktion und ihrer Aufnahmekapazität im wesentlichen gleichartig ausgeführt sein, wie es anhand Fig.1 näher erläutert worden ist. Bei diesem Ausführungsbeispiel ist dem - hier nicht im einzelnen veranschaulichten - Auslauf des Vorratssilos 20 nur ein Dosiergerät 25 zugeordnet. Über dieses Dosiergerät 25 und eine Fördereinrichtung, die vor allem durch einen Becherwerksförderer 27 gebildet wird, ist der Vorratssilo 20 nur direkt mit der Brenneinrichtung 10 verbunden. Dagegen ist dem Auslauf des Mischbehälters 19 wiederum - wie gemäß Fig.1 - ein Mengenaufteilgerät 21 zugeordnet, so daß - gleichartig wie im ersten Ausführungsbeispiel (Fig.1) - einerseits eine einstellbare Teilmenge, vorzugsweise eine einstellbare Hauptmenge des homogenisierten Massenstromes - vorzugsweise ebenfalls über den Becherwerksförderer 27 - direkt der Brenneinrichtung 10 und eine zweite einstellbare Teilmenge, vorzugsweise eine kleinere Teilmenge bzw. Restteilmenge, über einen zweiten Becherwerksförderer 28 dem Vorratssilo 20 zugeführt werden kann.

Betrachtet man im Falle der Fig.2 wiederum die Verfahrensweise bei Verbundbetrieb (Rohmühle läuft), dann wird also eine Hauptmenge der der Brenneinrichtung 10 zuzuführenden Rohmehlmischung vom Mischbehälter 19 direkt und eine kleinere, ebenfalls einstellbare Teilmenge vom Vorratssilo 20 ebenfalls direkt herangefördert, ohne daß die kleinere Teilmenge aus dem Vorratssilo 20 noch über den Mischbehälter 19 geführt werden kann.

Bei Direktbetrieb der Anlage (Rohmühle steht) können die zu verschiedenen Zeiten produzierten Rohmehlmischungen nicht nochmals verschnitten werden, da die von der Brenneinrichtung 10 benötigte Gesamtmenge der Rohmehlmischung dann nur direkt aus dem Vorratssilo 20 herangefördert wird.

Ein besonderer Vorteil der Ausführung gemäß Fig.2 ist vor allem in der Einsparung an Bauhöhe zu sehen.

Nach dem Ausführungsbeispiel in Fig.3 besteht ferner die Möglichkeit, den Homogenisierabschnitt 11'' so auszubilden, daß der den Mischbereich bildende Mischbehälter 19 über dem den Vorratsbereich bildenden Vorratssilo 20 angeordnet ist. Mischbehälter 19 und Vorratssilo 20 können hinsichtlich ihres allgemeinen Aufbaus, ihrer Funktion und ihrer Aufnahmekapazität wiederum gleichartig wie im ersten Ausführungsbeispiel (Fig.1) ausgeführt sein.

Bei diesem dritten Ausführungsbeispiel (Fig.3) sind zwischen der (nicht veranschaulichten, aber gleichartig wie in Fig.1 angeordneten) Rohmühle (9) und dem Mischbehälter 19 ein erster Senkrechtförderer, insbesondere ein erster Becherwerksförderer bzw. ein Mühlenbecherwerk 29 zum Beschicken des Mischbehälters 19 und im Förderbereich hinter dem Mischbehälter 19 ein zweiter Becherwerksförderer bzw. Ofenbecherwerk 30 zum Beschikken der Brenneinrichtung 10 vorgesehen. Im Förderbereich zwischen dem Mischbehälter 19 und dem darunter befindlichen Vorratssilo 20 ist wiederum ein Mengenaufteilgerät 21 derart vorgesehen, daß eine einstellbare Hauptmenge des homogenisierten Massenstromes der Rohmehlmischung - über das Ofenbecherwerk 30 - zur Brenneinrichtung 10 und eine kleinere, ebenfalls einstellbare Teilmenge bzw. Restmenge dieses homogenisierten Massenstromes in den Vorratssilo 20 eingeleitet werden kann. Unter dem Vorratssilo 20 ist in diesem Falle nur ein einstellbares Dosiergerät 24 vorgesehen, so daß eine Teilmenge, beispielsweise im Bereich von 10 bis 100 % des Massenstromes der Rohmehlmischung, über einen Verbindungsförderer nur zum Mischbehälter 19 zurückgefördert werden kann; als Verbindungsförderer dient hier zweckmäßig gleichzeitig der erste Senkrechtförderer bzw. das Mühlenbecherwerk 29.

Das in der Rohmühle gemahlene Rohmaterial wird gemäß Fig.3 insgesamt über die pneumatische Förderrinne 26 und das Mühlenbecherwerk 29 in den Mischbehälter 19 gefördert. Die Brenneinrichtung 10 wird nur vom Mischbehälter 19 aus über das Ofenbecherwerk 30 beschickt. Da in diesem Falle der Mischbehälter 19 über dem Vorratssilo 20 liegt, kann das Ofenbecherwerk 30 entsprechend kürzer ausgeführt werden. Wenn bei diesem dritten Anlagenbeispiel im Direktbetrieb (Rohmühle steht) gearbeitet werden muß, dann wird die Rohmehlmischung aus dem Vorratssilo 20 nur über das Mühlenbecherwerk 29 und den Mischbehälter 19 sowie das Ofenbecherwerk 30 der Brenneinrichtung 10 zugeführt.

Abschließend seien nochmals einige Hauptmerkmale des erfindungsgemäßen Verfahrens bzw. der erfindungsgemäßen Anlage stichwortartig genannt:
- Äußerst vorteilhafte Kombination zwischen einer Laborautomatik zum Zusammenstellen der Rohmaterialmischung aus verschiedenen Einzelkomponenten, einerseits, und einer raumsparenden, gezielt steuerbaren Misch- bzw. Homogenisiertechnik, andererseits;
- schnelle Regelzyklen durch Aufbereitung und Analyse der Materialproben vor Ort, wodurch sich eine homogenere Materialmischung und weniger Mischarbeit bzw. weniger Mischvolumen ergeben;
- die Materialmischung kann gezielt auf vorgegebene SOLL-Werte gebracht und gehalten werden, da Misch- und Vorratsbereich getrennt sind;
- ein rasches und gezieltes Homogenisieren der Materialmischung, da durch die relativ kleine Größe des Mischbereiches dessen gesamtes Volumen am Mischvorgang teilnimmt;
- weitere Verbesserung der Homogenität durch Verschneiden von Materialmischungen, die zu unterschiedlichen Zeiten produziert werden;
- Einsparung von Bau- bzw. Investitionskosten;
- Verringerung des Einflusses einer Separation der Materialmischung im Vorratsbereich durch kleine Materialmengenströme;
- eventuelle Mischbetten vor der Zerkleinerungseinrichtung (Rohmühle) können relativ klein ausgeführt, oder es kann ganz darauf verzichtet werden;
- Speicherkapazität des Vorratsbereiches wird nur noch von den erforderlichen Vorratsmengen bzw. Mindestvorratsmengen bestimmt;
- durch größere Homogenität der Rohmehlmischung werden eine vorgegebene und gleichbleibende Qualität des Erzeugnisses in einer nachfolgenden Weiterverarbeitungseinrichtung, beispielsweise eine gezielte und gleichbleibende Klinkerqualität und auch ein gleichmäßiger Brennbetrieb bei der Herstellung von Zementklinker erzielt (damit auch ein geringerer Energieverbrauch, weniger Ansatzbildung, längere Ofenstandzeiten);
- durch Trennung von Misch- und Vorratsbereich ist ein relativ rascher Qualitätwechsel möglich.

## Patentansprüche

1. Verfahren zur Aufbereitung einer Materialmischung aus mehreren mineralischen Rohmaterialkomponenten, insbesondere einer Rohmehlmischung zum Brennen von Zementklinker, wobei die Rohmaterialkomponenten in vorgegebenen Anteilen einzeln dosiert herangeführt, in einer Zerkleinerungseinrichtung (9) gemeinsam gemahlen, danach homogenisiert und dann dosiert einer Weiterverarbeitungseinrichtung (10) zugeführt werden, und wobei zumindest nach dem Mahlvorgang periodisch Materialproben entnommen, diese Materialproben wenigstens hinsichtlich ihrer chemischen Zusammensetzung automatisch vor Ort mit Hilfe einer Schnellanalysiereinrichtung analysiert und die dabei festgestellten IST-Werte einem Laborrechner (14) zugeleitet werden, der die IST-Werte mit vorgegebenen SOLL-Werten vergleicht, woraufhin bei einer Abweichung der IST-Werte von den SOLL-Werten über den Laborrechner (14) eines Steuersystems (13) ein Regel-eingriff zur Korrektur der Dosierung wenigstens einer Materialkomponente durchgeführt wird,
dadurch gekennzeichnet, daß
a) für das Homogenisieren der Materialmischung ein gesonderter Mischbereich (19) und ein gesonderter Vorratsbereich (20) vorgesehen werden, wobei der gesamte Rohmaterial-Massenstrom aus der Zerkleinerungseinrichtung (9) direkt dem gesonderten Mischbereich (19) zugeführt wird und darin gemischt wird, wobei die Gesamtaufnahmemenge des Mischbereiches (19) etwa der ein- bis dreifachen stündlichen Mahlleistung der Zerkleinerungseinrichtung (9) entspricht und die Materialmischung aus diesem Mischbereich (19) unter Verwendung eines einstellbaren Aufteilgerätes (21) einerseits direkt der Weiterverarbeitungseinrichtung (10) und andererseits dem gesonderten Vorratsbereich (20) in jeweils einstellbaren Mengenanteilen zugeführt werden kann und die Materialmischung aus dem Vorratsbereich dem Mischbereich (19) und/oder der Weiterverarbeitungseinrichtung (10) zugeführt werden kann.

2. Verfahren nach Anspruch 1, dadurch gekennzeichnet, daß in der Schnellanalysiereinrichtung (12, 12') die entnommenen Materialproben vor Ort aufbereitet und durch Röntgenfluoreszenzanalyse die IST-Werte dieser Materialproben ermittelt werden.

3. Verfahren nach Anspruch 1, dadurch gekennzeichnet, daß die IST-Werte der Analyse einem zentralen Laborrechner (14) zugeleitet werden.

4. Verfahren nach Anspruch 1, dadurch gekennzeichnet, daß die Materialproben im Bereich zwischen der Zerkleinerungseinrichtung (9) und dem Mischbereich (19) sowie wahlweise zusätzlich nach Verlassen des Mischbereiches automatisch gezogen und der unmittelbar in der Nähe dieser Abschnitte befindlichen Schnellanalysiereinrichtung (12, 12') zugeführt werden.

5. Verfahren nach Anspruch 4, dadurch gekennzeichnet, daß wenigstens vier repräsentative Materialproben je Stunde gezogen und vor Ort analysiert und über die Analysenwerte die jeweiligen IST-Werte hinsichtlich der Oxide sowie des Kalkstandards, Silikatmoduls und Tonerdemoduls errechnet werden.

6. Verfahren nach Anspruch 5, dadurch gekennzeichnet, daß die Zufuhr der einzelnen Rohmaterialkomponenten zur Zerkleinerungseinrichtung (9) jeweils für sich gewichtsmäßig dosiert und diese Dosierung direkt über den zentralen Laborrechner (14) des Steuersystems (13) zumindest im Sinne einer notwendigen Korrektur der SOLL-Werte der vorgegebenen Moduli eingestellt wird.

7. Verfahren nach Anspruch 1, dadurch gekennzeichnet, daß bei der Aufbereitung einer Rohmehlmischung zum Brennen von Zementklinker der gesamte Rohmaterial-massenstrom aus der Zerkleinerungseinrichtung (9) direkt in den Mischbereich (19) eingebracht wird und daß eine einstellbare Hauptmenge des homogenisierten Massenstromes aus dem Mischbereich (19) einer Brenneinrichtung (10) zum Brennen des Zementklinkers und eine kleinere, einstellbare Teilmenge dieses Massenstromes dem Vorratsbereich (20) zugeleitet wird.

8. Verfahren nach Anspruch 7, dadurch gekennzeichnet, daß aus dem Vorratsbereich (20) wenigstens ein einstellbarer Anteil wahlweise dem Mischbereich (19) und/oder der Brenneinrichtung (10) derart zugeführt wird, daß in diesem Vorratsbereich stets eine vorbestimmte Speichermenge der Rohmehlmischung aufrechterhalten wird.

9. Verfahren nach Anspruch 8, dadurch gekennzeichnet, daß beim Betrieb der Zerkleinerungseinrichtung (9) - Verbundbetrieb - eine Teilmenge von etwa 10 bis 30 % aus dem Mischbereich (19) in den Vorratsbereich (20) und aus dem Vorratsbereich eine einstellbare Teilmenge von etwa 10 bis 30 % zurück in den Mischbereich gefördert wird.

10. Verfahren nach Anspruch 7, dadurch gekennzeichnet, daß bei Stillstand der Zerkleinerungseinrichtung (9) - Direktbetrieb - eine einstellbare Hauptmenge - vorzugsweise etwa 70 bis 100 % - des Rohmaterial-Massenstromes erneut über den Mischbereich (19) geleitet und von dort der Brenneinrichtung (10) zum Brennen des Zementklinkers zugeführt wird, während die Restmenge dieses Massenstromes direkt der Brenneinrichtung zugeleitet und dort gemeinsam mit der vom Mischbereich (19) kommenden Hauptmenge aufgegeben wird.

11. Verfahren nach Anspruch 1, dadurch gekennzeichnet, daß bei der Aufbereitung einer Rohmehlmischung zum Brennen von Zementklinker der gesamte Rohmaterial-Massenstrom aus der Zerkleinerungseinrichtung (9) direkt in den Mischbereich (19) eingebracht wird und daß aus dem Vorratsbereich (20) wenigstens ein einstellbarer Anteil der Materialmischung direkt der Brenneinrichtung (10) zugeleitet wird.

12. Anlage zur Aufbereitung einer Materialmischung aus mehreren mineralischen Rohmaterial-Komponenten, insbesondere einer Rohmehlmischung zum Brennen von Zementklinker, enthaltend
a) mehrere für die einzelnen Rohmaterialkomponenten bestimmte Vorratszellen (1 bis 4), unter denen fernsteuerbare Dosiervorrichtungen (5 bis 8) angeordnet sind,
b) wenigstens eine Rohmühle (9) zum gemeinsamen Zerkleinern der in einstellbaren Mengen zuführbaren Rohmaterialkomponenten,
c) einen zwischen der Rohmühle und einer Weiterverarbeitungseinrichtung (10) angeordneten Homogenisierabschnitt (11, 11', 11''),
d) zumindest eine hinter der Rohmühle (9) angeordnete Materialproben-Entnahmestation (16),
e) wenigstens eine Analysiereinrichtung (12) zum Analysieren der entnommenen Materialproben zumindest hinsichtlich ihrer chemischen Zusammensetzungen, die vor Ort im Bereich der Materialprobe-Entnahmestation (16, 16') angeordnet und durch ein Schnellanalysiergerät (12, 12') für eine automatische Probeaufbereitung und Röntgenfluoreszenzanalyse gebildet ist und mit dem - vorzugsweise zentralen - Laborrechner (14) in Signalverbindung (18, 18') steht,
f) eine Steuereinrichtung (13), der der mit der Analysiereinrichtung verbundene Laborrechner (14) zugeordnet ist und die steuerungsmäßig mit den Dosiervorrichtungen (5 bis 8) derart in Verbindung steht, daß bei einer Abweichung der in der Analysiereinrichtung festgestellten IST-Werte der Materialproben von vorbestimmten SOLL-Werten ein Regeleingriff im Sinne einer Korrektur wenigstens einer Dosiervorrichtung durchführbar ist,
gekennzeichnet durch folgende Merkmale:
g) der Homogenisierabschnitt (11, 11', 11'') ist in einen gesonderten Mischbereich (19), der zum direkten Hineinfördern des gesamten Rohmaterial-Massenstromes aus der Rohmühle (9) vorgesehen ist, wobei die Gesamtaufnahmemenge des Mischbereichs (19) etwa der ein- bis dreifachen stündlichen Mahlleistung der Rohmühle (9) entspricht, und in einen gesonderten Vorratsbereich (20) unterteilt, wobei dem Mischbereich ein einstellbares Mengenaufteilgerät (21) nachgeordnet ist, das einerseits über einen ersten Förderweg mit der Brenneinrichtung (10) und andererseits über einen zweiten Förderweg mit dem Vorratsbereich (20) verbunden ist, der seinerseits über wenigstens ein einstellbares Dosiergerät (24, 25) mit dem Mischbereich (19) und/oder der Brenneinrichtung (10) in Verbindung steht.

13. Anlage nach Anspruch 12, dadurch gekennzeichnet, daß der Mischbereich durch einen Mischbehälter (19) gebildet ist, dessen Aufnahmekapazität etwa der einbis dreifachen stündlichen Mahlleistung der Rohmühle (9) angepaßt ist, während die Speicherkapazität des - vorzugsweise etwa in Form eines Durchlaufsilos (20) ausgebildeten - Vorratsbereiches einer vorgegebenen Vorratsmenge entspricht, die zumindest durch mögliche Stillstandszeiten der Rohmühle, eine zeitlich festgelegte erforderliche Verfügbarkeit der Brenneinrichtung oder dergleichen bestimmt ist.

14. Anlage nach Anspruch 12, dadurch gekennzeichnet, daß der Mischbereich (19) unterhalb des Vorratsbereiches (20) angeordnet und der Vorratsbereich über je eine einstellbare Dosiervorrichtung (24, 25) und je eine Förderverbindung einerseits mit dem Mischbereich (19) und andererseits mit der Brenneinrichtung (10) verbunden ist.

15. Anlage nach Anspruch 12, dadurch gekennzeichnet, daß der Mischbereich (19) räumlich etwa neben dem Vorratsbereich (20) angeordnet ist, wobei der Auslauf des Vorratsbereiches über sein Dosiergerät (25) und eine Fördereinrichtung (27) nur direkt mit der Brenneinrichtung (10) verbunden ist.

16. Anlage nach Anspruch 12, dadurch gekennzeichnet, daß der Mischbereich (19) über dem Vorratsbereich (20) angeordnet ist, wobei zwischen der Rohmühle (9) und dem Mischbereich (19) ein erster Senkrechtförderer, insbesondere ein erster Becherwerksförderer (29) zum Beschicken des Mischbereiches und hinter dem Mischbereich ein zweiter Becherwerksförderer (30) zum Beschicken der Brenneinrichtung (10) vorgesehen ist und wobei der Vorratsbereich über ein Dosiergerät (24) mit dem ersten Becherwerksförderer (29) zum Beschicken des Mischbereiches in Verbindung steht.

## Claims

1. Process for treating a mixture of materials comprising several mineral raw material components, especially a raw meal mixture for burning cement clinker, the raw material components being introduced in predetermined proportions in an individually metered manner, being ground together in a comminution device (9), then homogenised and subsequently supplied in a metered manner to a further-processing device (10) and, at least after the grinding operation, samples of material being taken periodically, the material samples being analysed automatically *in situ,* at least in respect of their chemical composition, with the aid of a rapid analysis device and the ACTUAL values established being conveyed to a laboratory computer (14) which compares the ACTUAL values with predetermined DESIRED values, whereupon, if the ACTUAL values deviate from the DESIRED values, a regulating intervention for correcting the metering of at least one material component is carried out by means of the laboratory computer (14) of a control system (13),
characterised in that
a) a separate mixing region (19) and a separate supply region (20) are provided for the homogenisation of the mixture of materials, the entire raw material mass flow from the comminution device (9) being supplied directly to the separate mixing region (19) and being mixed therein, the total receiving capacity of the mixing region (19) corresponding to approximately from one to three times the hourly grinding capacity of the comminution device (9) and it being possible, using an adjustable dividing apparatus (21), for the mixture of materials from the mixing region (19) to be supplied, on the one hand, directly to the further-processing device (10) and, on the other hand, to the separate supply region (20) in adjustable proportions in each case, and it being possible for the mixture of materials to be supplied from the supply region to the mixing region (19) and/or to the further-processing device (10).

2. Process according to claim 1, characterised in that, in the rapid analysis device (12, 12'), the material samples taken are processed *in situ* and the ACTUAL values of those material samples are determined by X-ray fluorescence analysis.

3. Process according to claim 1, characterised in that the ACTUAL values of the analysis are conveyed to a central laboratory computer (14).

4. Process according to claim 1, characterised in that the material samples are taken automatically in the region between the comminution device (9) and the mixing region (19) and optionally also after leaving the mixing region, and are conveyed to the rapid analysis device (12, 12') which is arranged in the immediate vicinity of those portions.

5. Process according to claim 4, characterised in that at least four representative material samples per hour are taken and analysed *in situ* and the ACTUAL values in respect of the oxides and the lime standard, the silica modulus and the alumina modulus are calculated by means of the analysis values.

6. Process according to claim 5, characterised in that the supply of the individual raw material components to the comminution device (9) is metered individually in terms of weight and the metering is adjusted directly by means of the central laboratory computer (14) of the control system (13) at least in accordance with a necessary correction of the DESIRED values of the predetermined moduli.

7. Process according to claim 1, characterised in that, when a raw meal mixture for burning cement clinker is treated, the entire raw material mass flow from the comminution device (9) is introduced directly into the mixing region (19), and in that an adjustable principal amount of the homogenised mass flow is conveyed from the mixing region (19) to a burning device (10) for burning the cement clinker and a smaller adjustable subsidiary amount of that mass flow is conveyed to the supply region (20).

8. Process according to claim 7, characterised in that at least one adjustable portion is supplied from the supply region (20) to the mixing region (19) and/or to the burning device (10), as desired, in such a manner that a predetermined stored amount of the raw meal mixture is always maintained in the supply region.

9. Process according to claim 8, characterised in that, during the operation of the comminution device (9) - interconnected operation -, a subsidiary amount of approximately from 10 to 30% is conveyed from the mixing region (19) into the supply region (20) and an adjustable subsidiary amount of approximately from 10 to 30% is conveyed from the supply region back into the mixing region.

10. Process according to claim 7, characterised in that, when the comminution device (9) is at a standstill - direct operation -, an adjustable principal amount - preferably approximately from 70 to 100% - of the raw material mass flow is again conveyed *via* the mixing region (19) and from there to the burning device (10) for burning the cement clinker, while the residual amount of that mass flow is conveyed directly to the burning device and is there fed in together with the principal amount coming from the mixing region (19).

11. Process according to claim 1, characterised in that, when a raw meal mixture for burning cement clinker is treated, the entire raw material mass flow from the comminution device (9) is introduced directly into the mixing region (19), and in that at least one adjustable portion of the mixture of materials is conveyed directly from the supply region (20) to the burning device (10).

12. Plant for treating a mixture of materials comprising several mineral raw material components, especially a raw meal mixture for burning cement clinker, containing
a) several supply cells (1 to 4) which are intended for the individual raw material components and beneath which remote-controllable metering devices (5 to 8) are arranged,
b) at least one raw mill (9) for the common comminution of the raw material components suppliable in adjustable amounts,
c) a homogenising portion (11, 11', 11") arranged between the raw mill and a further-processing device (10),
d) at least one material sample removal station (16) arranged behind the raw mill (9),
e) at least one analysis device (12) for analysing the removed material samples at least in respect of their chemical composition, which is arranged *in situ* in the region of the material sample removal station (16, 16') and which is formed by a rapid analysis device (12, 12') for automatic sample processing and X-ray fluorescence analysis and which is in signal connection (18, 18') with the - preferably central - laboratory computer (14),
f) a control device (13) with which the laboratory computer (14) connected to the analysis device is associated and which is connected in terms of control to the metering devices (5 to 8) in such a manner that if the ACTUAL material sample values established in the analysis device deviate from predetermined DESIRED values, a regulating intervention in accordance with a correction of at least one metering device can be carried out,
characterised by the following features:
g) the homogenising portion (11, 11', 11") is divided into a separate mixing region (19), which is provided for the direct introduction of the entire raw material mass flow from the raw mill (9), the total receiving capacity of the mixing region (19) corresponding to approximately from one to three times the hourly grinding capacity of the raw mill (9), and into a separate supply region (20), an adjustable amount-dividing apparatus (21) being arranged downstream of the mixing region and being connected, on the one hand, by way of a first transport path to the burning device (10) and, on the other hand, by way of a second transport path to the supply region (20) which, for its part, is connected by way of at least one adjustable metering device (24, 25) to the mixing region (19) and/or to the burning device (10).

13. Plant according to claim 12, characterised in that the mixing region is formed by a mixing container (19), the receiving capacity of which is adapted to approximately from one to three times the hourly grinding capacity of the raw mill (9), while the storage capacity of the supply region - preferably approximately in the form of a continuous-flow silo (20) - corresponds to a predetermined supply amount which is determined at least by possible standstill times of the raw mill, a necessary availability of the burning device which is laid down in terms of time, or the like.

14. Plant according to claim 12, characterised in that the mixing region (19) is arranged beneath the supply region (20), and the supply region is connected by way of a respective adjustable metering device (24, 25) and a respective conveying connection, on the one hand, to the mixing region (19) and, on the other hand, to the burning device (10).

15. Plant according to claim 12, characterised in that the mixing region (19) is arranged spatially approximately next to the supply region (20), the outlet of the supply region being connected by way of its metering device (25) and a conveying device (27) only directly to the burning device (10) .

16. Plant according to claim 12, characterised in that the mixing region (19) is arranged above the supply region (20), a first upright conveyor, especially a first bucket conveyor (29) for charging the mixing region, being provided between the raw mill (9) and the mixing region (19), and a second bucket conveyor (30) for charging the burning device (10) being provided behind the mixing region, and the supply region being connected by way of a metering device (24) to the first bucket conveyor (29) for charging the mixing region.

## Revendications

1. Procédé pour traiter un mélange de matières constitué par des constituants de matières premières minérales, notamment un mélange de farines brutes pour la cuisson de clinkers de ciment, selon lequel les constituants de matières premières sont amenés d'une manière dosée individuellement en des pourcentages prédéterminés, sont broyés conjointement dans un dispositif de fragmentation (9), puis sont homogénéisés et sont ensuite envoyés d'une manière dosée à un dispositif de traitement aval (10), et selon lequel des échantillons de matière sont prélevés périodiquement au moins après le processus de broyage, ces échantillons de matière sont analysés automatiquement sur place, au moins en ce qui concerne leur composition chimique, à l'aide d'un dispositif d'analyse rapide, et les valeurs réelles alors déterminées sont envoyées à un calculateur de laboratoire (14), qui compare les valeurs réelles à des valeurs de consigne prédéterminées, à la suite de quoi, en cas d'écart entre les valeurs réelles et les valeurs de consigne, une intervention de régulation visant à corriger le dosage d'au moins un constituant de matière est effectuée par l'intermédiaire du calculateur de laboratoire (14) d'un système de commande (13),
caractérisé en ce que
a) pour l'homogénéisation du mélange de matières, il est prévu une zone séparée de mélange (19) et une zone séparée de réserve (20), le courant massique total de la matière première provenant du dispositif de fragmentation (9) étant envoyé directement à la zone séparée de mélange (19) et étant mélangé dans cette dernière, la contenance totale de la zone de mélange (19) correspondant approximativement à la puissance de broyage horaire comprise entre environ la puissance de broyage horaire du dispositif de fragmentation (9) et le triple de cette valeur, et le mélange de matières provenant de cette zone de mélange (19) peut être envoyé moyennant l'utilisation d'un appareil de division réglable (21), en des pourcentages quantitatifs respectivement réglables, d'une part directement au dispositif de traitement aval (10) et d'autre part à la zone séparée de réserve (20), et le mélange de matières peut être envoyé depuis la zone de réserve à la zone de mélange (19) et/ou au dispositif de traitement aval (10).

2. Procédé selon la revendication 1, caractérisé en ce que dans le dispositif d'analyse rapide (12,12'), les échantillons de matière prélevés sont traités sur place et les valeurs réelles de ces échantillons de matière sont déterminées par analyse par fluorescence X.

3. Procédé selon la revendication 1, caractérisé en ce que les valeurs réelles de l'analyse sont envoyées à un calculateur de laboratoire central (14).

4. Procédé selon la revendication 1, caractérisé en ce que les échantillons de matière sont prélevés automatiquement dans la zone située entre le dispositif de fragmentation (9) et la zone de mélange (19) et au choix en outre après que la matière a quitté la zone de mélange, et sont envoyés au dispositif d'analyse rapide (12,12') situé directement à proximité de ces sections.

5. Procédé selon la revendication 4, caractérisé en ce qu'au moins quatre échantillons représentatifs de matière sont prélevés chaque heure et sont analysés sur place et plus les valeurs réelles respectives concernant les oxydes ainsi que la norme de calcaire, le module de silicate et le module d'alumine sont calculés à partir des valeurs d'analyse.

6. Procédé selon la revendication 5, caractérisé en ce que chaque envoi des différents constituants de matières premières au dispositif de fragmentation (9) est dosé du point de vue pondéral, et ce dosage est réglé directement au moyen du calculateur de laboratoire central (14) du système de commande (13) au moins dans le sens d'une correction nécessaire des valeurs de consigne des modules prédéterminés.

7. Procédé selon la revendication 1, caractérisé en ce que lors du traitement du mélange de farines brutes pour la cuisson de clinkers de ciment, l'ensemble du courant massique de matières premières est introduit depuis le dispositif de fragmentation (9) directement dans la zone de mélange (19) et qu'une quantité principale réglable du courant massique homogénéisé peut être envoyée depuis la zone de mélange (19) à un dispositif de cuisson (10) servant à cuire les clinkers de ciment et qu'une partie réglable assez faible de ce cycle est envoyée à la zone de réserve (20) .

8. Procédé selon la revendication 7, caractérisé en ce qu'au moins un pourcentage réglable est envoyé au choix depuis la zone de réserve (20) à la zone de mélange (19) et/ou au dispositif de cuisson (10) de telle sorte qu'en permanence une quantité de stockage prédéterminée du mélange de farines brutes est conservée dans cette zone de réserve.

9. Procédé selon la revendication 8, caractérisé en ce que lors du fonctionnement du dispositif de fragmentation (9) - fonctionnement composite - une partie d'environ 10 à 30 % provenant de la zone de mélange (19) est renvoyée dans la zone de réserve (20) et une partie réglable d'environ 10 à 30 % est renvoyée depuis la zone de réserve dans la zone de mélange.

10. Procédé selon la revendication 7, caractérisé en ce que lorsque le dispositif de fragmentation (9) est arrêté - fonctionnement direct - une quantité principale réglable - de préférence environ 70 à 100 % - du courant massique de la matière première est envoyée à nouveau par l'intermédiaire de la zone de mélange (19) et est envoyée, à partir de là, au dispositif de cuisson (10) pour la cuisson des clinkers de ciment, tandis que la quantité résiduelle de ce courant massique est envoyée directement au dispositif de cuisson et est ajoutée conjointement avec la quantité principale arrivant de la zone de mélange (19).

11. Procédé selon la revendication 1, caractérisé en ce que lors du traitement d'un mélange de farines brutes pour la cuisson de clinkers de ciment, le courant massique total de matières premières est introduit depuis le dispositif de fragmentation (9) directement dans la zone de mélange (19) et qu'au moins un pourcentage réglable du mélange de matières est envoyé depuis la zone de réserve (20) directement au dispositif de cuisson (10).

12. Installation pour le traitement d'un mélange de matières formé de plusieurs constituants de matières premières minérales, notamment d'un mélange de farines brutes pour la cuisson de clinkers de ciment, contenant
a) plusieurs cellules de réserve (1 à 4), qui sont prévues pour les différents constituants de matières premières et au-dessous desquelles sont disposés des dispositifs de dosage télécommandables (5 à 8),
b) au moins un broyeur de matières premières (9) pour fragmenter conjointement les constituants de matières premières pouvant être amenés en des quantités réglables,
c) une section d'homogénéisation (11,11',11") disposée entre le broyeur de matières premières et un dispositif de traitement aval (10),
d) au moins un poste (16) de prélèvement d'échantillons de matière, disposé en aval du broyeur de matières premières (9),
e) au moins un dispositif d'analyse (12) pour analyser les échantillons de matière prélevés au moins en ce qui concerne leurs compositions chimiques et qui est disposé dans la zone du poste (16,16') de prélèvement d'échantillons de matière et est formé par un appareil d'analyse rapide (12,12') servant à réaliser un traitement automatique des échantillons et une analyse par fluorescence X, et est relié selon une liaison de transmission de signaux (18,18') au calculateur de laboratoire (14) - de préférence central,
f) un dispositif de commande (13), qui est associé au calculateur de laboratoire (14) relié au dispositif d'analyse et qui est relié, du point de vue commande, aux dispositifs de dosage (5 à 8), de telle sorte que dans le cas d'un écart entre les valeurs réelles des échantillons de matière, déterminés dans le dispositif d'analyse, et des valeurs de consigne prédéterminées, une intervention de régulation est exécutée dans le sens d'une correction d'au moins un dispositif de dosage,
caractérisée par les caractéristiques suivantes :
g) la section d'homogénéisation (11,11',11") est subdivisée en une zone séparée de mélange (19), qui est prévue pour l'entraînement direct de l'ensemble du courant massique de matières premières à partir du broyeur de matières premières (9), la quantité totale de prélèvement de la zone de mélange (19) correspondant à une puissance de broyage horaire comprise approximativement entre la puissance de broyage horaire du broyeur de matières premières (9) et le triple de cette valeur, et en une zone séparée de réserve (20), un appareil réglable (21) de division quantitative étant disposé en aval de la zone de mélange, cet appareil étant relié d'une part par l'intermédiaire d'un premier trajet de convoyage au dispositif de cuisson (10) et d'autre part par l'intermédiaire d'un second trajet de convoyage à la zone de réserve (20), qui est reliée pour sa part par l'intermédiaire d'au moins un appareil de dosage réglable (24,25) à la zone de mélange (19) et/ou au dispositif de cuisson (10).

13. Installation selon la revendication 12, caractérisée en ce que la zone de mélange est formée par un récipient de mélange (19), dont la contenance est adaptée à une puissance de broyage horaire comprise approximativement entre la puissance de broyage horaire du broyeur de matières premières (9) et le triple de cette valeur, tandis que la capacité de stockage de la zone de réserve - agencée de préférence sous la forme d'un silo dynamique ou silo de mélange continu (20) - correspond à une quantité de réserve prédéterminée, qui est déterminée au moins par des temps d'arrêt possibles du broyeur de matières premières, une disponibilité nécessaire, fixée dans le temps, du dispositif de cuisson ou analogue.

14. Installation selon la revendication 12, caractérisée en ce que la zone de mélange (19) est disposée au-dessous de la zone de réserve (20), et la zone de réserve est reliée par l'intermédiaire d'un dispositif respectif de dosage réglable (24,25) et d'une liaison respective de convoyage d'une part à la zone de mélange (19) et d'autre part au dispositif de cuisson (10).

15. Installation selon la revendication 12, caractérisée en ce que la zone de mélange (19) est disposée spatialement approximativement à côté de la zone de réserve (20), la sortie de la zone de réserve étant reliée uniquement directement au dispositif de cuisson (10) par l'intermédiaire de son appareil de dosage (25) et d'un dispositif de convoyage (27).

16. Installation selon la revendication 12, caractérisée en ce que la zone de mélange (19) est disposée au-dessous de la zone de réserve (20), et dans laquelle entre le broyeur des matières premières (9) et la zone de mélange (19) est disposé un premier convoyeur vertical, notamment un premier transporteur à godets (29) servant à charger la zone de mélange et, en aval de la zone de mélange, un second transporteur à godets (3) servant à charger le dispositif de cuisson (10), et dans lequel la zone de réserve est reliée par l'intermédiaire d'un appareil de dosage (24) au premier transporteur à godets (29) pour le chargement de la zone de mélange.
